# FASCICULE DE BREVET EUROPEEN

(11) **EP 0 896 995 B1**
(45) Date de publication et mention de la délivrance du brevet: **12.12.2001**
(21) Numéro de dépôt: 98450008.2
(22) Date de dépôt: 22.06.1998
(51) Int. Cl.: C09K 17/52

(54) **Nouveau milieu de couverture de sol du type mulch ou analogue**
Bodenabdeckungsmittel bzw. Mulch oder Ähnliches
Mulch type soil covering medium

(30) Priorité: 13.08.1997 FR 9710491
(43) Date de publication de la demande: 17.02.1999
(73) Titulaire: Courtabessis Capital Consulting (3C) Société à Responsabilité Limitée, 33720 Landiras (FR)
(72) Inventeur: Courtabessis, Pascal, 33720 Landiras (FR); Courtabessis, Stéphane, 33720 Landiras (FR)
(74) Mandataire: Thébault, Jean-Louis

(56) Documents cités:
- CA-A- 2 092 963
- DE-A- 4 200 855
- GB-A- 2 261 215

## Description

La présente invention a trait aux milieux de couverture de sol et plus particulièrement à ceux du type mulch ou analogue.

De tels milieux de couverture sont susceptibles de remplir plusieurs fonctions et les divers milieux actuellement utilisés le sont le plus souvent à des fins spécifiques.

D'une manière générale ils servent principalement à maintenir dans le sol la chaleur ou l'humidité, mais d'autres fonctions sont également recherchées.

Certains, tels que les feuilles minces de matière plastique, sont étendus sur les semis ou au pied d'arbres, d'arbustes ou de plantes. Ils ont également comme fonction de faire écran à la lumière et à l'air et ainsi d'empêcher le développement aérien de végétaux non désirés.

D'autres, tels que paille, feuilles sèches, écorces de résineux, etc... sont constitués d'éléments distincts, juxtaposés en vrac sur une épaisseur variable. Ils sont chargés, pêle-mêle et à des degrés divers, de réguler les échanges entre le sol et l'air, de réduire l'évaporation de surface, de constituer des réserves d'humidité, de stocker les calories d'origine solaire, de réduire les déperditions thermiques, de restreindre l'accès de l'air et de la lumière à la couche superficielle du sol afin de supprimer ou réduire le développement de végétaux indésirables, ou encore de mettre des fruits hors de contact d'avec le sol, des melons par exemple pour éviter d'être souillés.

De plus en plus et c'est le cas tout particulièrement des écorces de résineux, ils sont utilisés également à des fins esthétiques, car ils participent à la clarté, la netteté et la décoration du paysage, de tels milieux étant employés essentiellement en milieu urbain, dans les espaces publics, ainsi que chez les particuliers.

Dans cet usage on demande à ces milieux de couverture un certain nombre de propriétés dont certaines peuvent s'avérer difficilement conciliables, voire contradictoires et, de surcroît, des aptitudes de plus en plus exigeantes de conservation de ces propriétés dans le temps.

En particulier, pour ce qui concerne les écorces de résineux, la tenue dans le temps d'un tel milieu de recouvrement est brève et aléatoire, du fait notamment du caractère très dispersable des fragments d'écorce, du fait d'actions mécaniques de diverses origines (ruissellement, oiseaux et autres animaux).

La demande anglaise GB-A-2 261 215 décrit des milieux de couverture à base de fibres cellulosiques et de solides organiques. La cohésion de tels milieux est obtenue grâce à l'humidité ou grâce à d'autres éléments présents avec les fibres et/ou les solides organiques. Dans ce document, aucune mention n'est faite concernant les caractéristiques propres aux fibres qui permettraient d'assurer cette cohésion qui peut, par ailleurs être assurée par la seule présence des solides organiques.

Il n'existe malheureusement pas de milieu de couverture à finalité esthétique idéal possédant toutes ces propriétés, associées en outre à un coût très bon marché et facile à produire, stocker, manipuler et mettre en place.

La présente invention concerne principalement ce type de milieu de couverture de sol et vise à proposer un milieu offrant un nombre substantiellement plus important de propriétés avantageuses et adaptées à l'objectif recherché que les milieux actuels destinés aux mêmes usages.

A cet effet, l'invention a pour objet un milieu de couverture de sol du type mulch ou analogue, caractérisé en ce qu'il est constitué de fibres végétales présentant un taux cumulé de lignine et de résine supérieur ou égal à 25% environ par rapport au poids sec de fibres et une longueur supérieure ou égale à 0,5 mm environ pour au moins 70% environ des fibres, ces dernières étant formées de filaments ou fibrilles individuels.

Avantageusement, lesdites fibres sont utilisées en vrac et présentent, en outre, un bouffant supérieur ou égal à environ 60 mm, mesuré en hauteur de cylindre de fibres de section constante, non soumis à pression, les fibres étant à l'état séché à l'air.

Les couvertures de sol utilisant les fibres ayant les particularités ou propriétés ci-dessus ont en commun, outre d'excellentes capacités, notamment de protection du sol, de régulation des échanges gazeux sol-air, d'absorption d'eau, d'écran à la lumière, une très bonne cohésion qui conjuguée au caractère pérenne du bouffant des fibres, assure une tenue dans le temps tout à fait remarquable à ces couvertures qui peuvent ainsi, pendant une durée beaucoup plus longue que les couvertures de sol actuelles destinées aux mêmes usages, apporter leurs pleines capacités.

Les fibres destinées à de tels usages sont par ailleurs faciles à obtenir et de manière relativement économique et d'un emploi très aisé, notamment pour ce qui concerne la mise en place sur la surface à couvrir, à la main ou à la machine par exemple, du fait que les fibres, lorsqu'elle sont en vrac, se présentent sous forme d'amas de fibres enchevêtrées.

On va maintenant décrire plus en détail les milieux de couverture de sol selon l'invention, en particulier à partir d'essais et de mesures de diverses caractéristiques physico-chimiques de plusieurs types de fibres susceptibles ou non de convenir dans leur application conforme à l'invention.

Dans le tableau 1 ci-après sont reportées des mesures de caractéristiques physico-chimiques, d'une part, de fibres de pin maritime, de fibres de pin sylvestre, et de fibres de coco, toutes ces fibres convenant à la réalisation de couvertures de sol ou mulch stables et efficaces et, d'autre part, de fibres de feuillus (mélange chêne + châtaignier), de fibres de lin vert, de fibres de lin affiné, de laine de verre et de laine de roche, qui ne conviennent pas.

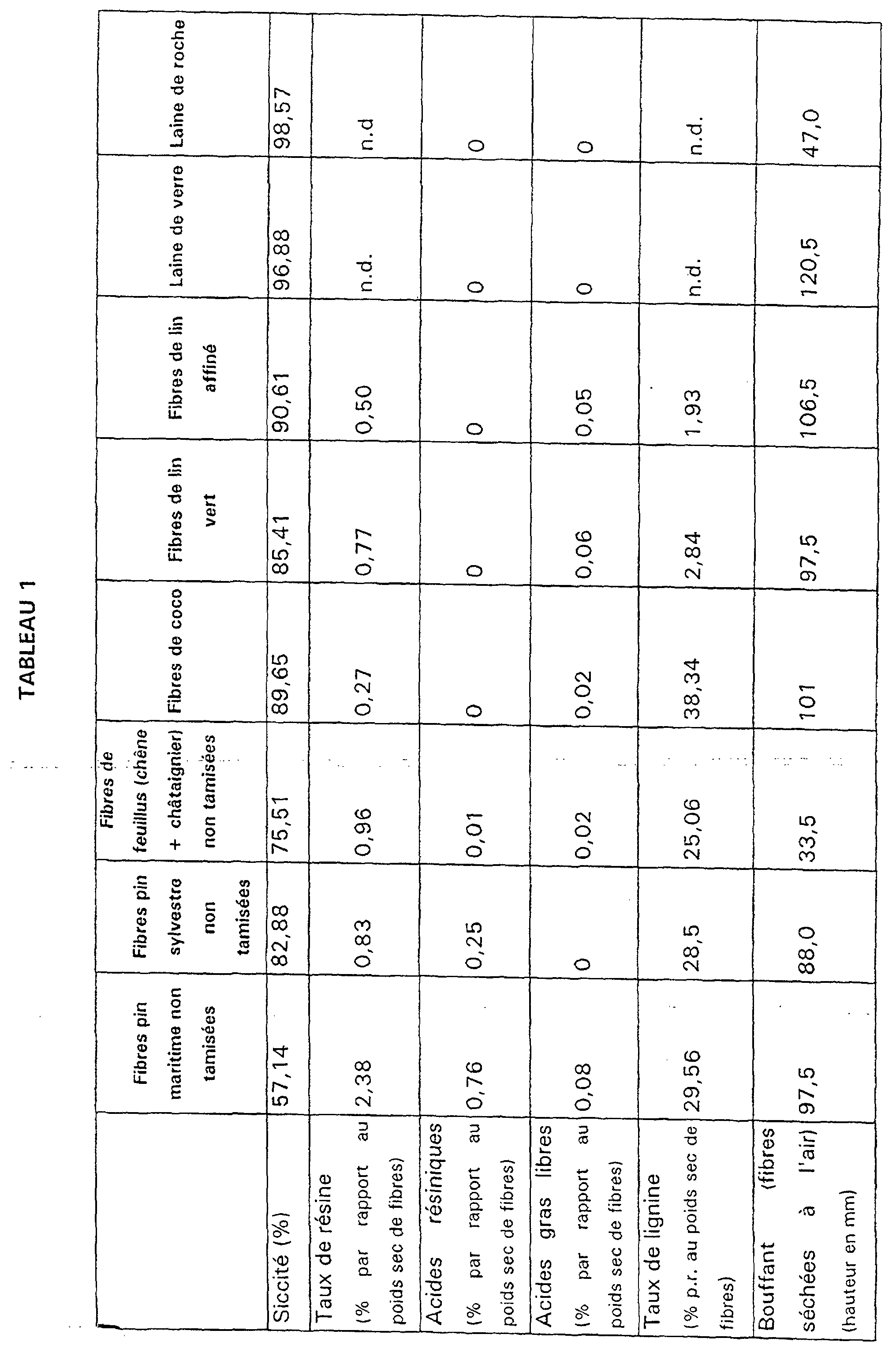

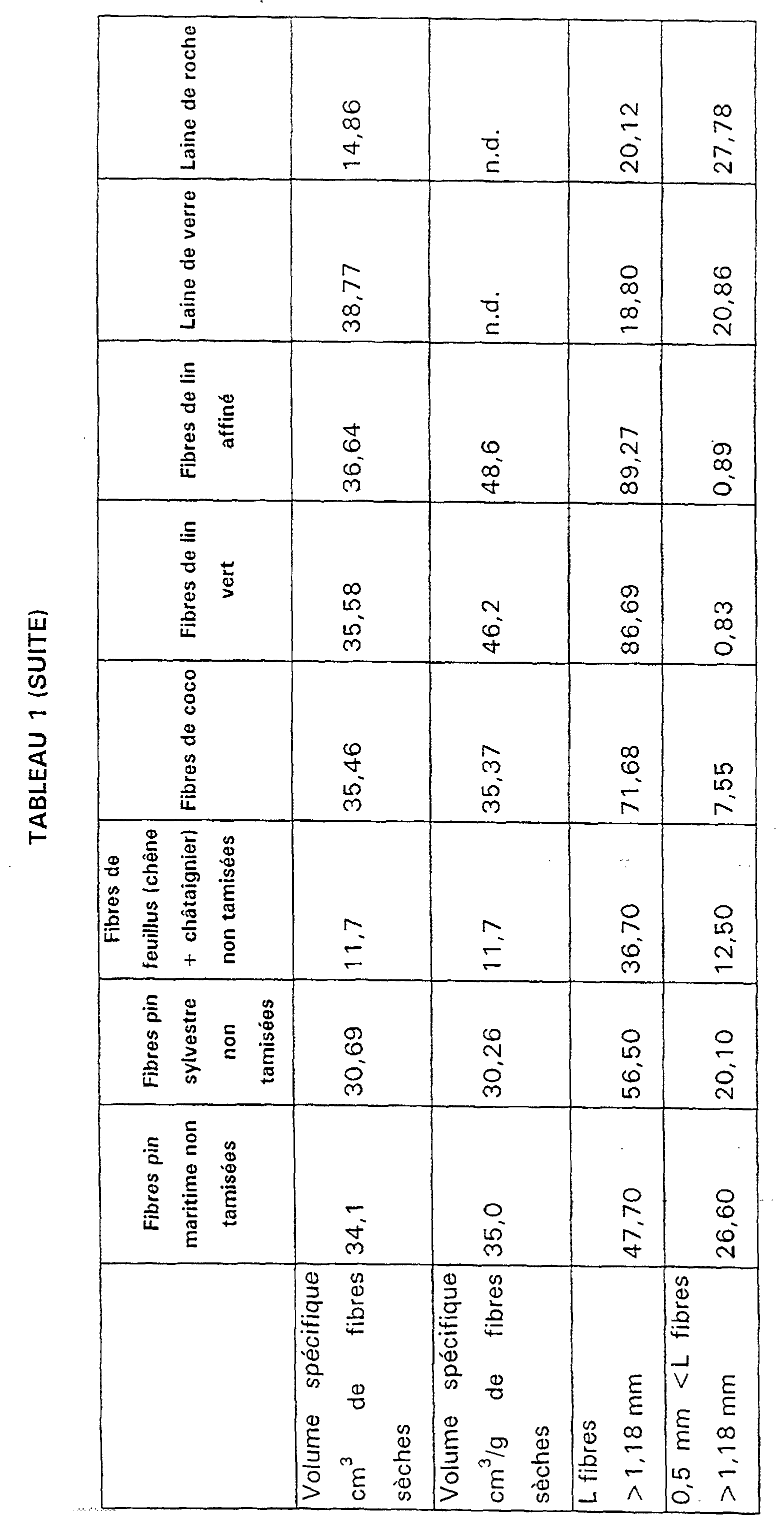

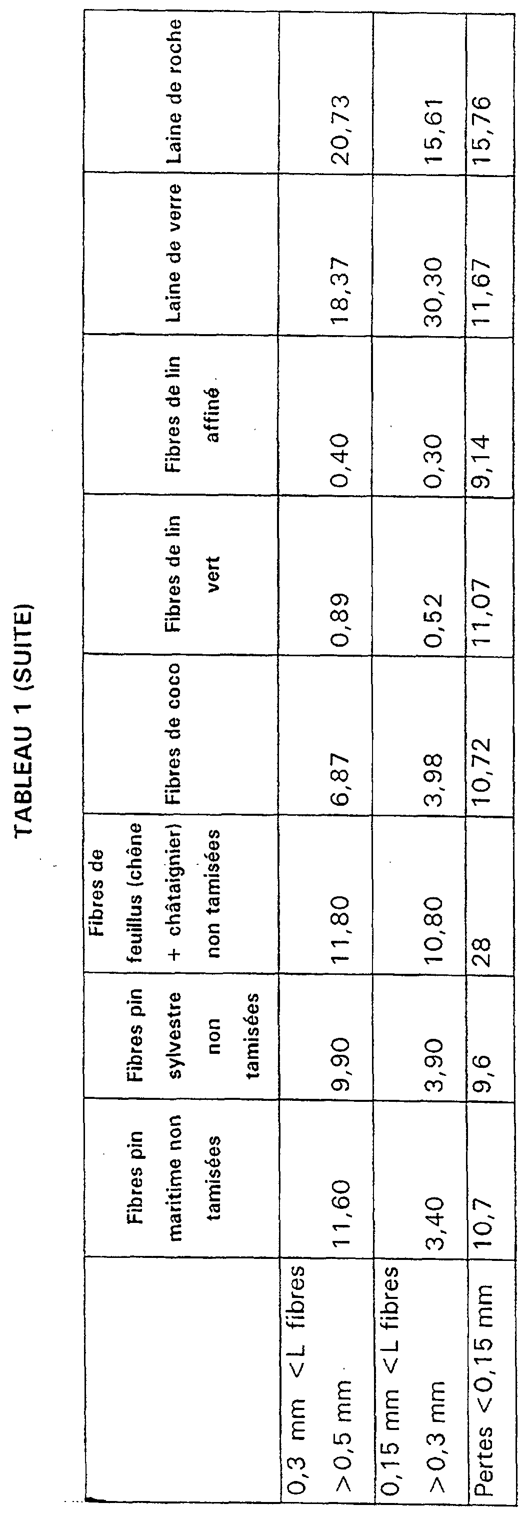

A la suite d'essais il s'est révélé que les fibres de pin maritime, de pin sylvestre et les fibres de coco, dont les caractéristiques physico-chimiques étudiées sont rapportées dans le tableau 1, avaient un comportement en application comme couverture de sol, remarquable par les propriétés suivantes, les fibres étant déposées en vrac suivant une couche continue de cinq à huit centimètres : densité appropriée ni trop forte ni trop faible assurant un bon contrôle des échanges gazeux et un bon écran à la lumière, bonne capacité d'absorption d'eau et surtout une bonne cohésion entre les fibres qui ont plus tendance à demeurer dans leur état initial enchevêtré que les mulchs traditionnels, sans trop se tasser, ni trop s'éparpiller avec le temps et/ou à cause d'agents extérieurs tels qu'intempéries (vent, pluie, eaux de ruissellement) ou animaux (oiseaux, chiens, chats, etc...).

Il a en effet été observé que ces fibres restent groupées comme si elles étaient liées entre elles et que cet effet de liant semble avoir pour cause en premier lieu la présence importante de lignine, mais aussi, pour les fibres de résineux notamment, la présence notable de résine.

Un taux cumulé de lignine et de résine dans les fibres supérieur ou égal à environ 25% par rapport au poids sec de fibres semble donc l'un des critères déterminant pour une utilisation des fibres comme mulch ou analogue, conformément à l'invention.

Dans le tableau 1 on observe que les fibres de pin maritime, de pin sylvestre, et de coco ont un taux cumulé de lignine et résine supérieur à 25%.

Pour ce qui concerne les fibres de coco, le taux très réduit de résine est compensé par un taux beaucoup plus élevé de lignine que celui des résineux.

Un autre critère déterminant dans l'utilisation de fibres végétales conforme à l'invention est la longueur des fibres qui doit être supérieure ou égale à 0,5 mm environ pour au moins 70% des fibres.

Dans le tableau 1 les longueurs de fibres, déterminées selon le protocole de classage normalisé CLARK et exprimées en pourcentage du total de fibres, montrent que ce critère est satisfait pour les fibres de pin maritime, de pin sylvestre et de coco.

Les fibres de résineux et de feuillus objets des essais et mesures rapportées dans le tableau 1 proviennent directement d'un défibrage mécanique entre deux vis sans vapeur d'eau et n'ont pas subi de tamisage. Il est évident qu'un tamisage de ces fibres améliorerait encore le pourcentage de fibres de longueur supérieure à 0,5 mm.

Il est à noter que les fibres de feuillus, bien qu'ayant un taux cumulé de lignine et résine légèrement supérieur à 25% ne sont pas adaptées à un usage comme mulch car les fibres sont trop courtes. Les fibres testées provenaient également directement d'un même défibrage mécanique que les autres fibres.

Comme indiqué dans le tableau 1, la proportion des fibres de feuillus de dimension inférieure à 0,3 mm est de près de 40%, avec 28% de fibres inférieures à 0,15 mm ou à l'état de poussières.

Avec des fibres de longueur très sensiblement inférieure à 0,5 mm on observe une mauvaise tenue de la couche de mulch qui est trop tassée et manque de cohésion, c'est-à-dire est sujette à dispersion.

Le bouffant des fibres que l'on peut définir comme la capacité des fibres à occuper, à l'état non comprimé, un volume plus ou moins aéré, est également un bon critère de sélection pour une utilisation en mulch. Le bouffant est lié à une interaction des fibres dont la longueur est évidemment déterminante. Plus les fibres seront longues et plus le bouffant sera important.

Le bouffant se détermine habituellement par la mesure de la hauteur d'un "cylindre de fibres" de section constante et non soumis à pression. Dans le tableau 1 le bouffant est mesuré avec des fibres séchées à l'air.

Un bouffant supérieur ou égal à 60 mm est considéré comme souhaitable pour un usage en vrac des fibres conforme à l'invention.

Dans le tableau 1 on constate que les fibres de pin maritime, les fibres de pin sylvestre et les fibres de coco satisfont également à ce critère.

Les fibres de feuillus par contre ne satisfont pas non plus à cet autre critère.

Les autres fibres (lin, laine de verre ou de roche), soumises à essai ne satisfont pas en particulier le critère essentiel du taux cumulé de lignine et résine et ne saurait convenir comme mulch ou analogue en dépit de l'éventuelle satisfaction du critère de longueur des fibres (cas du lin vert ou affiné) et de la satisfaction du critère de bouffant (cas du lin et de la laine de verre). Il est à noter à ce propos que la laine de verre a, et de loin, le meilleur bouffant, dû probablement à ses propriétés électrostatiques.

Toutefois, ce bouffant n'est pas permanent car il ne revient pas après tassement alors que dans les fibres de résineux et de coco testées, le bouffant est permanent en ce sens qu'il revient sensiblement à l'état initial après tassement, la couche de mulch possédant en quelque sorte une certaine élasticité tout à fait intéressante au plan de la pérennité des propriétés mécaniques du mulch.

Il est à noter que cette propriété de bouffant des fibres utilisées conformément à l'invention ne s'observe que lorsque lesdites fibres sont mises en oeuvre en vrac, c'est à dire qu'elles sont foisonnantes, non agglomérées, ni compressées.

Suivant un autre mode d'application de l'invention, les fibres peuvent être conditionnées en plaques ou en bandes enroulées, posées ou déroulées au sol. A cet effet, les fibres sont déposées sous forme d'un lit de fibres tassées , comprimées ou agglomérées, une armature tissée notamment à mailles larges étant intégrée dans ce lit.

La non-satisfaction du critère de taux cumulé de lignine et résine exclut l'usage comme mulch, lequel se révèle trop instable, dispersable et perd trop rapidement ses propriétés mécaniques.

Il a également été observé que la cohésion entre fibres dans un mulch à fibres de résineux est plus forte et serait due à la présence d'acides résiniques qui entraîne un meilleur accrochage entre elles des fibres.

Dans le tableau 1 on notera que pour les fibres de pin maritime et les fibres de pin sylvestre, la proportion dans la résine des acides résiniques par rapport aux acides gras libres (tous les deux exprimés dans le tableau 1 en pourcentage par rapport au poids sec de fibres) est beaucoup plus importante.

En ce qui concerne les fibres de résineux testées il a été également mis en valeur un effet particulier analogue à un croûtage à la surface du mulch réalisé à l'aide de ces fibres.

En effet, l'exposition à l'air et à la lumière des fibres de résineux provoque la formation très rapide d'une couche mince superficielle dans laquelle les fibres sont plus liées entre elles en comparaison avec les fibres du dessous.

Ce phénomène de "croûtage" semble dû à la présence de la lignine et des acides gras combinés.

Une analyse par spectrométrie de masse d'un échantillon de la "croûte" a révélé des dégradations de la lignine.

La "croûte" possède en outre beaucoup moins d'acides résiniques et d'acides gras libres que les fibres de dessous.

Dans le tableau 2 ci-après on a rassemblé les valeurs mesurées des taux de résine, d'acides résiniques et d'acides gras libres, exprimés en pourcentage par rapport aux fibres sèches, de fibres de pin maritime prélevées dans la croûte et en dessous de cette dernière respectivement.

**TABLEAU 2**

| | FIBRES DE PIN MARITIME (DESSOUS) | FIBRES DE PIN MARITIME (CROUTE) |
|---|---|---|
| Taux de résine | 1,85 | 1,38 |
| Acides résiniques | 0,74 | 0,13 |
| Acides gras libres | 0,27 | 0,05 |

Les modifications des acides gras et résiniques au niveau de la croûte peuvent s'expliquer notamment comme une conséquence du traitement thermique subi par les fibres lors du défibrage.

L'invention couvre l'utilisation à titre de couverture de sol, du type mulch ou analogue, des fibres de résineux et de coco dont les essais ont été rapportés ci-dessus, mais également de toute fibre d'origine végétale satisfaisant au moins aux deux critères de taux cumulé de lignine et de résine et de longueur de fibre exposés plus haut.

Les fibres sont utilisables conformément à l'invention telles qu'elles sortent du processus d'obtention, de préférence un défibrage mécanique pour ce qui concerne les fibres d'essences résineuses, selon l'une des techniques connues utilisées en papeterie ou dans l'industrie des panneaux de fibres de bois agglomérées.

En particulier les fibres provenant directement des défibreurs de cette dernière industrie peuvent être, après égouttage et éventuellement tamisage, utilisées telles quelles comme couverture de sol.

Outre les défibreurs qui mettent en oeuvre un défibrage en atmosphère de vapeur d'eau, d'autres dispositifs, tels que des vis de défibrage à sec, permettent d'obtenir des fibres pouvant convenir, les fibres étant éventuellement tamisées.

Suivant un autre aspect de l'invention et dans un but esthétique les fibres utilisables comme mulch ou analogue peuvent être avantageusement colorées, notamment dans la masse, par toute technique appropriée et suivant tous coloris, donnant ainsi à l'utilisateur la possibilité de réaliser des compositions colorées variées, adaptées à l'environnement, c'est-à-dire aussi bien aux végétaux qu'aux objets ou surfaces voisins.

Enfin, les fibres utilisées conformément à l'invention peuvent être complémentées par divers adjuvants à fonction phytosanitaire, nutritive, répulsive à l'égard de certains animaux par exemple, etc..., voire des adjuvants parfumés.

## Revendications

1. Milieu de couverture de sol du type mulch ou analogue, **caractérisé en ce qu'**il est constitué de fibres végétales présentant un taux cumulé de lignine et de résine supérieur ou égal à 25% par rapport au poids sec de fibres et une longueur supérieure ou égale à 0,5 mm pour au moins 70% des fibres, ces dernières étant formées de filaments ou fibrilles individuels.

2. Milieu suivant la revendication 1, **caractérisé en ce que** lesdites fibres sont utilisées en vrac et présentent, en outre, un bouffant supérieur ou égal à environ 60 mm, mesuré en hauteur de cylindre de fibres de section constante, non soumis à pression, les fibres étant à l'état séché à l'air.

3. Milieu suivant la revendication 1, **caractérisé en ce que** lesdites fibres sont conditionnées en plaques ou en bandes enroulées, et sont sous la forme d'un lit de fibres tassées, compressées ou agglomérées.

4. Milieu suivant l'une des revendications 1 à 3, **caractérisé en ce que** lesdites fibres sont susceptibles de provenir d'essences résineuses et notamment de pin maritime et de pin sylvestre.

5. Milieu suivant la revendication 4, **caractérisé en ce que** lesdites fibres sont susceptibles d'être issues d'un processus de défibrage mécanique et sont éventuellement tamisées avant emploi.

6. Milieu suivant la revendication 5, **caractérisé en ce que** lesdites fibres sont susceptibles de provenir d'un défibrateur à disques en atmosphère de vapeur d'eau et sont utilisables telles quelles, après égouttage et éventuellement séchage et tamisage.

7. Milieu suivant la revendication 1, **caractérisé en ce que** lesdites fibres sont des fibres de coco.

8. Milieu suivant l'une des revendications 1 à 7, **caractérisé en ce que** lesdites fibres sont colorées, notamment dans la masse.

9. Milieu suivant l'une des revendications 1 à 8, **caractérisé en ce que** lesdites fibres sont complémentées notamment pour adjoindre une fonction phytosanitaire, nutritive, répulsive ou parfumée.

## Patentansprüche

1. Mittel zum Abdecken des Bodens des Typs Mulch oder dergleichen, **dadurch gekennzeichnet, daß** es aus pflanzlichen Fasern gebildet ist, die einen kumulierten Anteil Lignin und Harz größer oder gleich 25 % in bezug auf das Trockengewicht der Fasern sowie für wenigstens 70 % der Fasern eine Länge größer oder gleich 0,5 mm aufweisen, wobei diese letzteren aus einzelnen Fäden oder Fibrillen gebildet sind.

2. Mittel nach Anspruch 1, **dadurch gekennzeichnet, daß** die Fasern in loser Schüttung verwendet werden und außerdem eine Bauschung größer oder gleich etwa 60 mm aufweisen, die anhand der Zylinderhöhe von Fasern mit konstantem Querschnitt, die keinem Druck unterliegen, gemessen wird, wobei sich die Fasern im luftgetrockneten Zustand befinden.

3. Mittel nach Anspruch 1, **dadurch gekennzeichnet, daß** die Fasern in Platten oder aufgerollten Bändern abgepackt sind und in Form einer Lage aus dichtgepackten, komprimierten oder zusammengeballten Fasern vorliegen.

4. Mittel nach einem der Ansprüche 1 bis 3, **dadurch gekennzeichnet, daß** die Fasern aus harzigen Baumarten und insbesondere aus der Harzfichte und der Kiefer stammen können.

5. Mittel nach Anspruch 4, **dadurch gekennzeichnet, daß** die Fasern einem mechanischen Holzzerfaserungsprozeß entstammen können und vor der Verwendung eventuell gesiebt werden.

6. Mittel nach Anspruch 5, **dadurch gekennzeichnet, daß** die Fasern einem in einer Wasserdampfatmosphäre befindlichen Scheiben-Holzzerfaserer entstammen können und nach einer Entwässerung und eventuell einer Trocknung und Siebung unverändert verwendbar sind.

7. Mittel nach Anspruch 1, **dadurch gekennzeichnet, daß** die Fasern Kokosfasern sind.

8. Mittel nach einem der Ansprüche 1 bis 7, **dadurch gekennzeichnet, daß** die Fasern insbesondere als Gesamtmasse gefärbt sind.

9. Mittel nach einem der Ansprüche 1 bis 8, **dadurch gekennzeichnet, daß** die Fasern zugegeben werden, um insbesondere eine Pflanzenschutzfunktion, eine Nahrungsfunktion, eine Abstoßungsfunktion oder eine Parfümierungsfunktion hinzuzufügen.

## Claims

1. Soil covering medium of the mulch type or the like, **characterized in that** it is constituted of vegetable fibers having a cumulative lignin and resin content greater than or equal to 25% relative to the dry weight of the fibers and a length greater than or equal to 0.5 mm for at least 70% of the fibers, these latter being formed by individual filaments or fibrils.

2. Medium according to claim 1, **characterized in that** said fibers are used in bulk and have moreover a puff greater than or equal to about 60 mm, measured in the height of a cylinder of fibers of constant cross section, not subjected to pressure, the fibers being in an air-dried condition.

3. Medium according to claim 1, **characterized in that** said fibers are produced in plates or rolled strips, and are in the form of a bed of entangled, compressed or agglomerated fibers.

4. Medium according to one of claims 1 to 3, **characterized in that** said fibers may coming from resinous and particularly from cluster pine or scotch pine.

5. Medium according to claim 4, **characterized in that** said fibers may coming from mechanical defibering processes and are if desired screened before use.

6. Medium according to claim 5, **characterized in that** said fibers may coming from a disc defibrator in a steam atmosphere and are usable as such, after draining and if desired drying and screening.

7. Medium according to claim 1, **characterized in that** said fibers are coconut fibers.

8. Medium according to one of claims 1 to 7, **characterized in that** said fibers are colored, particularly in the mass.

9. Medium according to one of claims 1 to 8, **characterized in that** said fibers are supplemented particularly to be phytosanitary, nutritive, repulsive or perfumed.
